# EUROPEAN PATENT APPLICATION

(11) **EP 1 762 294 A2**
(43) Date of publication of application: **14.03.2007**
(21) Application number: 06120110.9
(22) Date of filing: 05.09.2006
(51) Int. Cl.: B01D 53/04, B01D 53/22

(54) **Gas purification**

(30) Priority: 07.09.2005 US 714561 P; 18.08.2006 US 506548
(71) Applicant: THE BOC GROUP, INC., Murray Hill, New Jersey 07974 (US)
(72) Inventor: Jain, Ravi, Bridgewater New Jersey 08807 (US); Uhlman, Bruce Walter, Mount Arlington, NJ 07856 (US)
(74) Representative: Wickham, Michael

(57) **Abstract**

The present invention provides for a method for purifying a carbon monoxide-containing gas stream that contains hydrocarbon impurities, such as methane, by using a cryogenic temperature swing adsorption method, at cryogenic temperatures below-75°C. The carbon monoxide-containing gas stream may be pre-purified by membrane separation or vacuum swing adsorption or cryogenic distillation.

## Description

### BACKGROUND OF THE INVENTION

This invention relates to the purification of streams containing carbon monoxide and more particularly to the removal of (low molecular weight) hydrocarbons (e.g., methane) from a carbon monoxide stream by adsorption at cryogenic temperatures.

Carbon monoxide (CO) is a major building block for the chemical industry. Besides use as an intermediate in the production of acetic acid, formic acid, and dimethyl formamide to name a few, CO is also a key raw material in the production of phosgene. Phosgene is a key intermediate in many chemical industries, namely polycarbonates, polyurethanes, agricultural chemicals and fine chemicals (pharmaceutical). During the production of phosgene, a CH₄ concentration in the CO of more than 100 ppm is detrimental to the overall process from a standpoint of purity, recovery and environmental emissions. Current industry/customer purity requirements are for a methane concentration around 20 ppm or less.

The production of carbon monoxide involves conventional techniques such as steam methane reforming, partial oxidation of hydrocarbons, methanol cracking, and CO₂ reforming. In the steam reforming process, hydrocarbons such as methane are converted to syngas, a mixture of carbon monoxide, carbon dioxide, hydrogen and water, through the reaction of hydrocarbons with steam. In the partial oxidation step, hydrocarbons are reacted with oxygen to give syngas, a mixture of carbon monoxide, hydrogen, carbon dioxide and water. The product from both steam reforming and partial oxidation steps, as well as the other methods, can contain additional impurities such as unreacted hydrocarbons and unreacted oxygen. Amounts of low molecular weight hydrocarbons, such as methane, ethane, etc., in the product from steam methane reforming or the partial oxidation steps can range between 0.1 to 5.0 mol%. In order to isolate the CO from the syngas, the syngas stream undergoes various purification steps (e.g., amine absorption, temperature swing adsorption, vacuum swing adsorption, membrane separation or cryogenic distillation) in order to achieve the desired final CO product purity.

During the vacuum swing adsorption purification step, water is removed first using a temperature swing adsorption step. The dry gas mixture containing carbon dioxide, hydrocarbons, hydrogen and carbon monoxide is then sent to an adsorbent bed containing a carbon monoxide selective adsorbent. High purity carbon monoxide is produced during evacuation of the adsorbent beds. Since carbon monoxide comes out at low pressure, it needs to be compressed before it can be sent to the end user's process. Due to the complexity of vacuum swing adsorption process and compression needs after the process, this approach can become quite expensive, particularly when the amount of carbon monoxide produced is small.

For the final purification using cryogenic distillation, the gas mixture exiting the steam methane reforming or the partial oxidation step is purified in a temperature swing adsorption step or amine wash column wherein both water and carbon dioxide are removed. The gas mixture is then cooled to cryogenic temperatures and impurities such as hydrocarbons, hydrogen and nitrogen are removed in a series of cryogenic distillation columns. Such processes are described in U.S. Patents 6,062,042 and 6,073,461, and German patent 19,541,339.

In addition to temperature swing adsorption or amine wash, gas separation membranes can also be used for partial removal of impurities such as water, carbon dioxide and hydrogen prior to further processing by cryogenic distillation. Combination of membranes and cryogenic distillation is described in German patent application DE-A-4,325,513 and Japanese patent application JP-A-63-247582. Due to high capital and power requirements, cryogenic distillation processes are limited to high carbon monoxide product flows (> 2,000 Nm³/hr product CO).

Because of the increasing need for carbon monoxide supplies containing low levels of hydrocarbons, continuous efforts are being made to develop inexpensive and efficient processes for the removal of hydrocarbons from carbon monoxide streams. The present invention provides such a process.

### SUMMARY OF THE INVENTION

According to a first aspect of the present invention there is provided a method for removing impurities from a carbon monoxide-containing gas stream at cryogenic temperatures by a temperature swing adsorption process having an adsorption step and a regeneration step, the adsorption step comprising passing said gas stream through a bed containing an adsorbent material selective for hydrocarbons, thereby producing a carbon monoxide gas stream free of hydrocarbons.

High purity carbon monoxide, i.e., carbon monoxide containing no more than about 100 ppm by volume (and preferably not more than 20 ppm by volume) of hydrocarbons, is able to be produced from a carbon monoxide stream containing hydrocarbon impurities by the method according to the first aspect of the present invention. The adsorption is generally carried out in the gaseous phase at temperatures between the dew point (for example, about minus 175ºC) of the carbon monoxide-hydrocarbon mixture at the pressure prevailing in the adsorption vessel and about -75° C. Operating pressures are typically in the range of about 1.0 to 40.0 atmospheres, absolute (1.0 to 41 bar). In preferred embodiments the adsorption is carried out at temperatures in the range of about -175° to -125° C.

The hydrocarbons that are preferably removed from the carbon monoxide-containing gas stream are selected from the group consisting of methane, ethane, ethylene, propane and propylene.

The adsorption is conducted in a bed comprising an adsorbent. Suitable adsorbents for use in the method according to the first aspect of the invention that preferentially adsorb hydrocarbons include activated carbon, modified activated carbon, pillared clays, carbon molecular sieve, clinoptilolites and modified clinoptilolites, small pore mordenites and mixtures thereof, and in preferred embodiments, an adsorbent selected from activated carbon, modified activated carbon and pillared clays.

The adsorption is preferably carried out in a battery of two or more adsorption beds arranged in parallel and operated out of phase, so that at least one bed is undergoing adsorption while another is undergoing regeneration. The method according to the first aspect of the invention is typically effective for the removal of up to about 5% total by volume of one or more hydrocarbons from the carbon monoxide containing gas stream.

Typically, upon completion of the adsorption step, flow of the feed gas through the adsorption bed is terminated and the adsorption bed is regenerated by passing a warm hydrocarbon-free purge gas therethrough. The purge gas preferably is at a temperature of about -20° to +250° C. The preferred purge gas is gaseous N₂ with the high purity carbon monoxide being produced during the adsorption step being used as a final purge gas.

The carbon monoxide-containing gas stream may, for example, be produced by either a reforming process or a partial oxidation process.

In general, the carbon monoxide containing gas stream may if desired by pre-purified by membrane separation, vacuum swing adsorption or cryogenic distillation, or by any combination thereof. Thus, the gas stream containing carbon monoxide may be formed by passage through a temperature swing adsorption unit and/or a vacuum swing adsorption unit to produce a carbon monoxide-rich stream which may then be compressed and sent to additional, optional units for the removal of oxygen, carbon dioxide and, if needed, hydrogen impurities.

In yet another example, a precursor gas stream containing carbon monoxide is purified in a temperature swing adsorption unit to remove water and carbon dioxide impurities. A cryogenic distillation system is used to remove light impurities such as hydrogen and nitrogen. The cryogenic distillation may be employed upstream or downstream of the method according to the first aspect of the invention.

While the invention is described primarily with the reference to the purification of CO, it is equally applicable to the purification of streams containing both CO and H₂. Various H₂ removal steps such as membranes and methanizer can be omitted for this case.

According to a second aspect of the present invention there is provided a method for removing impurities from a carbon monoxide containing gas stream comprising passing said gas stream sequentially through a first membrane separation unit and a process unit, the process unit being selected from the group consisting of a second membrane separation unit, a deoxo/methanizer unit, a first temperature swing adsorption unit, a cryogenic adsorption unit, and combinations of these process units.

The first membrane separation unit preferably removes hydrogen, carbon dioxide, water and oxygen from the carbon monoxide-containing gas stream.

The second membrane unit preferably removes hydrogen, carbon dioxide and oxygen from the carbon monoxide-containing gas stream.

The deoxo/methanizer unit preferably removes oxygen and hydrogen from said carbon monoxide containing gas stream.

The first temperature swing adsorption unit preferably contains an adsorbent selective for carbon dioxide. It may be used in conjunction with the cryogenic adsorption unit which is preferably a second temperature swing adsorption unit suitable for use in the method according to the first aspect of the invention.

Thus, the said second temperature swing adsorption unit may perform an adsorption step and a regeneration step, the adsorption step comprising passing said carbon monoxide containing gas stream through a bed containing an adsorbent material selective for hydrocarbons, thereby producing a carbon monoxide gas stream free of hydrocarbons.

Typically, in the method according to the second aspect of the present invention, hydrocarbon is present in said carbon monoxide-containing gas stream in an amount of less than about 5% by volume.

### BRIEF DESCRIPTION OF THE DRAWINGS

The invention is illustrated in the drawings, in which:
Figure 1 depicts a cryogenic adsorption system for recovering substantially pure carbon monoxide from a carbon monoxide feed stream in accordance with the principle of the invention;
Figure 2 illustrates a first embodiment of a system in accordance with the invention for producing high purity carbon monoxide showing membrane purification followed by cryogenic adsorption;
Figure 3 illustrates a second embodiment of a system in accordance with the invention for producing high purity carbon monoxide showing carbon monoxide VSA followed by cryogenic adsorption; and
Figure 4 illustrates a third embodiment of a system in accordance with the invention for producing high purity carbon monoxide showing cryogenic adsorption either before or after cryogenic distillation.

Like reference numerals and letters designate like or corresponding parts throughout the drawings. Auxiliary valves, lines and equipment not necessary for an understanding of the invention have been omitted from the drawings.

### DETAILED DESCRIPTION OF THE INVENTION

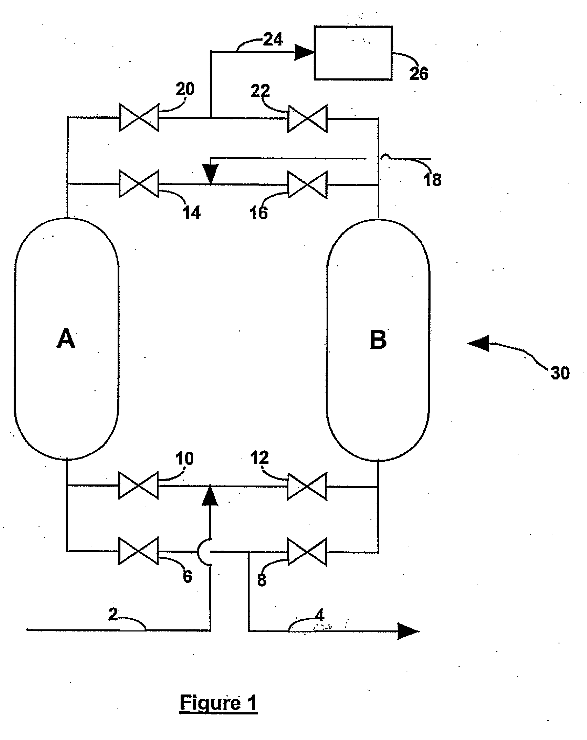

With reference to Figure 1 of the drawings, a carbon monoxide-enriched gas stream containing hydrocarbon impurities is passed through a bed of adsorbent which preferentially adsorbs hydrocarbons from the carbon monoxide-enriched gas stream at cryogenic temperatures, thereby removing substantial quantities of the hydrocarbons from the gas stream. The adsorption process operates on a temperature swing adsorption (TSA) cycle. An adsorption system 30, illustrated in Figure 1 is depicted as comprising two parallel arranged beds; however, the invention is not limited to a two-bed system. A single bed adsorption system can be used, or the system can comprise more than two parallel-arranged adsorption beds. The number of adsorption beds in the system is not critical to the operation of the invention. In the two bed system illustrated in the drawings, one bed is in the adsorption mode while the other bed is in the regeneration mode.

Adsorbers A and B are identical and each is packed with a bed of particulate adsorbent which adsorbs hydrocarbons in preference to carbon monoxide. Adsorbers A and B include adsorbents selected from activated carbon and modified activated carbon, pillared clays, carbon molecular sieve, clinoptilolites and modified clinoptilolites, small pore mordenites and mixtures thereof, and in preferred embodiments, an adsorbent selected from activated carbon, modified activated carbon and pillared clays.

In the adsorption system illustrated in Figure 1, valves 10 and 12 control the flow of feed gas to beds A and B, respectively; valves 6 and 8 control the flow of purge gas and desorbed gas from adsorbers A and B, respectively; valves 14 and 16 control the flow of purge gas to adsorbers A and B, respectively; and valves 20 and 22 control the flow of purified carbon monoxide product gas from adsorbers A and B, respectively.

The operation of the adsorption system will first be described with bed A in the adsorption mode and bed B in the regeneration mode. In this half of the cycle, valves 8, 10, 16 and 20 are open and valves 6, 12, 14 and 22 are closed. Feed gas enters the adsorption system through line 2, passes through valve 10 and enters adsorber A. As the gas passes through adsorber A, hydrocarbons are preferentially adsorbed therefrom. The hydrocarbon-depleted carbon monoxide stream, now usually containing no more than about 100 ppm by volume of hydrocarbons, passes through valve 20 and leaves the adsorption system through line 24. In the embodiment illustrated in Figure 1, the purified carbon monoxide is sent to unit 26 which represents user equipment, a storage tank or a downstream process wherein carbon monoxide can be reacted further with other chemicals.

While high purity carbon monoxide is being produced in adsorber A, the bed of adsorbent in adsorber B is being regenerated. During regeneration, a warm purge gas is introduced into adsorber B through line 18 and open valve 16. Initial bed heating can be accomplished with a dry gas such as argon, carbon monoxide or nitrogen. It is preferred to use high purity carbon monoxide as the final purge gas to avoid contaminating the adsorption beds. The preferred regeneration direction is countercurrent to adsorption direction.

Part of the product leaving the system through line 24 can be used as the regeneration purge gas or the purge can be supplied externally. The warm purge gas passes through bed B, thereby desorbing and sweeping hydrocarbons therefrom. The desorbed hydrocarbons are removed from the system through open valve 8 and line 4. This gas may be completely vented to the atmosphere, used as a fuel or a part of it can be reintroduced into the system to recover the carbon monoxide used as purge gas.

During the course of the adsorption step, the adsorbed gas front in adsorber A progresses toward the outlet end of this unit. When the front reaches a predetermined point in the bed, the first half of the cycle is terminated and the second half is begun.

During the second half of the adsorption cycle, adsorber B is put into adsorption service and the bed in adsorber A is regenerated. During this half of the cycle valves 6, 12, 14 and 22 are open and valves 8, 10, 16 and 20 are closed. Feed gas now enters the adsorption system through line 2 and passes through adsorber B through valves 12 and 22 and line 24. Meanwhile, the bed in adsorber A is being regenerated. During regeneration of the bed in adsorber A, the warm purge gas passes through the adsorber A via line 18, valve 14, valve 6 and line 4. When the adsorption front in the bed in adsorber B reaches the predetermined point in this bed, the second half of the cycle is terminated, and the cycle is repeated.

**TABLE I Typical Cycle Sequence for the Cryogenic TSA Process of the Invention**

| Step | Time, Hr. |
|---|---|
| Pressurize Bed A, purify using Bed B | 0.5 |
| Purify using Bed A, vent Bed B to atmosphere | 0.5 |
| Purify using Bed A, regenerate Bed B with warm purge gas | 8.0 |
| Purify using Bed A, cool Bed B with cold purge gas | 15.0 |
| Pressurize Bed B, purify using Bed A | 0.5 |
| Purify using Bed B, vent Bed A to atmosphere | 0.5 |
| Purify using Bed B, regenerate Bed A with warm purge gas | 8.0 |
| Purify using Bed B, cool Bed A with cold purge gas | 15.0 |
| Total | 48.0 hr |

The feed to adsorbers A and B is typically at a temperature between the dew point of carbon monoxide at the prevailing pressure and about -75° C, and preferably at a temperature in the range of about -175° and -125° C. While the feed to the adsorbers will typically be at its dew point or warmer in some cases the feed can contain small amounts (up to 10%) of liquid to overcome the heat losses and heat of adsorption. The prevailing pressure in adsorbers A and B during the adsorption step is generally in the range of about 1.0 to 40.0 atmospheres, absolute (1.0 to 41 bar). The rate of flow of the regeneration gas through the system is typically between 5 and 15% of the feed flow rate. The regeneration gas temperature is in the range of about -20° and 250° C. The concentration of hydrocarbon impurities in the feed gas is between 100 ppm and 5%. Prior to the initial start of carbon monoxide purification, the beds in adsorbers A and B are heated to temperatures up to 300° C to remove any residual moisture contained therein. This step is not repeated during the regular operation. A sample cycle for the process is given in Table I.

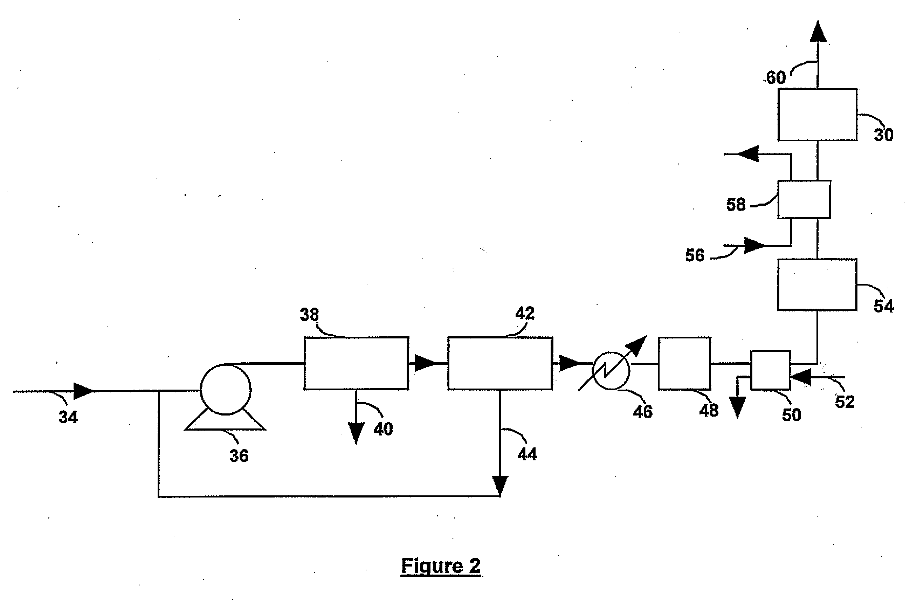

In a different embodiment of the present invention illustrated in Figure 2, a stream of carbon monoxide 34 from a partial oxidation or a steam-methane reforming process containing impurities such as hydrogen, carbon dioxide, water, oxygen and light hydrocarbons is purified in successive steps to produce carbon monoxide containing low levels of hydrocarbons. If the stream 34 is not at high enough pressure, 10 to 20 bar, it is compressed to a pressure between 10 to 20 bar in the optional compressor unit 36. The stream exiting the compressor unit 36 enters a first membrane separation unit 38 wherein almost all the water and majority of hydrogen and carbon dioxide and some oxygen are removed in the permeate stream 40.
Stream 40 can be recycled further upstream of the purification process in order to reclaim chemical or fuel value for its components. Stream exiting membrane unit 38 is sent to a second membrane unit 42 wherein more hydrogen and carbon dioxide and some oxygen is removed. The permeate stream exiting the second membrane unit, stream 44, is recycled to compressor 36 to maximize carbon monoxide recovery.

Membrane units 38 and 42 include conventional gas separation membranes made from polymers such as polysulfones, polycarbonates, polyimides, cellulose acetates and their modified forms. These membranes are more permeable to gases such as hydrogen, water, carbon dioxide and oxygen in comparison to carbon monoxide.

The carbon monoxide-enriched stream exiting membrane unit 42 is heated in a heater 46 to temperatures between 100 and 400° C and sent to a DeOxo/methanizer unit 48. In unit 48 any remaining oxygen is removed by reaction with hydrogen or carbon monoxide over a noble metal (platinum, palladium, rhodium or ruthenium) or a base metal (nickel, copper) or copper/manganese oxide catalyst. Hydrogen is also removed in unit 48 by reaction of hydrogen with either carbon monoxide or carbon dioxide over a methanation catalyst such as nickel. The stream exiting unit 48 contains hydrocarbons such as methane and ethane and carbon dioxide as main impurities.

The stream leaving unit 48 is cooled to close to near ambient temperature in a heat exchanger 50 using a coolant 52. The stream exiting unit 50 is sent to a temperature swing adsorption unit 54 wherein carbon dioxide is removed by adsorption on zeolites which are preferably 5A and 13X type zeolites. Typical adsorption times for this unit will range between 4 and 16 hours and the regeneration is carried out by heating the beds with a carbon dioxide-free stream at temperatures between 100 and 250° C followed by cooling to close to ambient temperatures. Two or more beds are used for close to continuous operation.

The stream exiting unit 54 is cooled to cryogenic temperatures, between - 175° and -125° C, in heat exchanger 58 using liquid or gaseous oxygen, nitrogen, argon, mixed hydrocarbons or mixtures thereof as cryogens. The stream exiting unit 58 is purified in the cryogenic adsorption unit 30 to produce high purity carbon monoxide stream 60 containing less than 100 ppm total hydrocarbons. The operation of unit 30 has been described earlier in connection with Figure 1.

If a stream containing CO and H₂ is to be purified then membrane units 38 and 42 can be omitted. Unit 48 will contain a catalyst only for reaction of O₂ with CO or H₂ and unit 54 will contain adsorbents for both water and carbon dioxide removal.

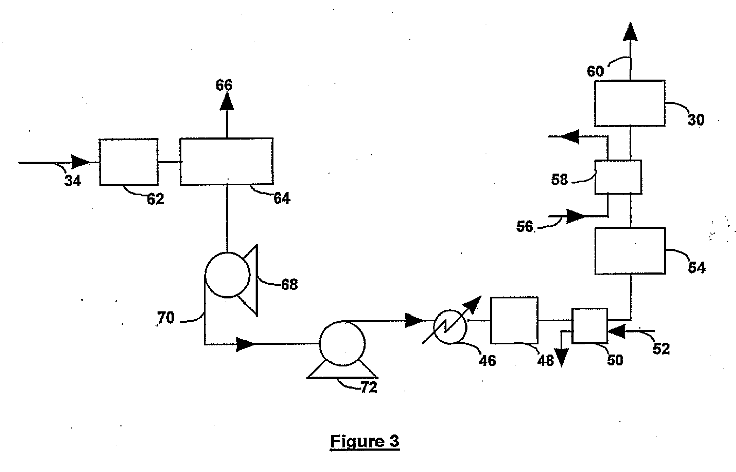

A further embodiment of the present invention is shown in Figure 3. In Figure 3 the carbon monoxide-containing gas stream 34 from a steam methane reforming unit or a partial oxidation unit is sent to a temperature swing adsorption unit 62. Unit 62 removes either water or both water and carbon dioxide from stream 34 by adsorption. Activated alumina, silica gel or zeolites such as 3A, 4A, 5A or 13X molecular sieve can be used for water removal and zeolites such as 5A and 13X can be used for carbon dioxide removal. Two or more beds are used for continuous operation and the beds are regenerated thermally using a gas stream essentially free of water and/or carbon dioxide.

Gas stream exiting unit 62 is sent to a vacuum swing adsorption unit 64. Unit 64 contains one or more beds wherein carbon monoxide is preferentially adsorbed. The adsorbents in unit 64 typically contain Cu⁺ (copper of valance one) on zeolites such as Y zeolite or other adsorbents such as activated alumina and activated carbon. The adsorption is typically carried out at temperatures between about 20 and 100° C and at pressures between about 0.5 to 10 bara. High pressure product from unit 64 is removed as stream 66 and contains hydrogen, carbon dioxide, hydrocarbons and some carbon monoxide. Carbon monoxide product 70 is obtained during evacuation of the adsorbent beds using vacuum pump 68 at pressures between 0.05 to 0.3 bara and may contain impurities such as hydrocarbons, carbon dioxide and hydrogen at low levels. Recovery of carbon monoxide from unit 64 increases as the impurity level in stream 70 increases.

Carbon monoxide product stream 70 is typically at a pressure close to atmospheric and is compressed using compressor 72 to pressures between 5 and 20 bara. If needed, impurities such as hydrogen and carbon dioxide from this stream can be removed by heating the gas mixture in heater 46, removing hydrogen in unit 48, cooling the stream in unit 50 and removing carbon dioxide in unit 54. Operation of these units has been described in more detail during discussion of Figure 2. Carbon monoxide enriched stream exiting unit 54 is cooled in unit 58 and hydrocarbons from this stream are removed in cryogenic adsorption unit 30 to produce a high purity carbon monoxide stream 60. Operation of unit 30 has been described earlier.

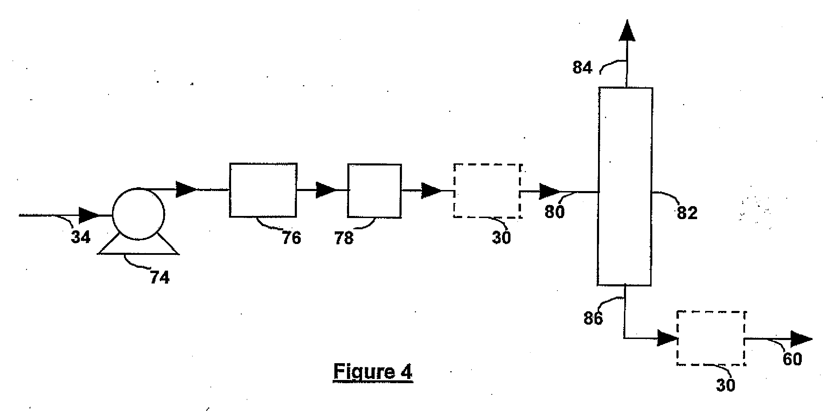

A further embodiment of the invention is shown in Figure 4. A carbon monoxide-containing product stream 34 is compressed in compressor 74 and the compressed stream is sent to a temperature swing adsorption unit 76 for the removal of water and carbon dioxide. The carbon monoxide-containing stream essentially free of water and carbon dioxide is cooled to cryogenic temperatures in refrigeration unit 78. In unit 78 the carbon monoxide stream is cooled to cryogenic temperatures through a combination of a turboexpander and heat exchange with product streams. Hydrocarbon impurities from the stream exiting unit 78 can be removed in cryogenic adsorption unit 30. This can be done to reduce the refrigeration load on downstream cryogenic distillation system. It can also be done to delete methane removal column from the system.

Carbon monoxide stream 80, with or without hydrocarbons, is sent to a distillation column system 82 wherein an overhead product containing light impurities such as hydrogen and nitrogen are removed as stream 84 and a carbon monoxide stream 86 is produced as the bottoms product. If the hydrocarbons have been previously removed in unit 30 prior to cryogenic distillation unit 82 stream 86 is high purity carbon monoxide product and can be sent to a downstream process or to storage. If the hydrocarbons have not been removed prior to distillation stream 86 containing hydrocarbon impurities is sent to a cryogenic adsorption unit 30 and the stream 60 exiting this unit is the high purity carbon monoxide product.

The invention is further exemplified by the following examples, in which parts, percentages and ratios are on a volume basis, unless otherwise indicated.

### EXAMPLE I

Commercially available 40x60 mesh activated carbon was loaded in a 3 mm diameter adsorbent bed of 3m (10 ft) length. The total weight of adsorbent was about 5.4 g. A feed stream containing 1% methane and 99% carbon monoxide was passed through this bed at -173° C, 10 psig (24.7 x 6894 Pa) and at a flow rate of 0.1 std liters/min. Methane concentration at the bed outlet was monitored using a total hydrocarbon analyzer. Methane concentration at the bed outlet remained below 1 ppm for a period of about 343 minutes after which methane concentration started rising quickly.

### EXAMPLE II

The column of Example I was used and the experiment was run at a feed pressure of 50 psig (64.7 x 6894 Pa). The rest of the conditions were same as in Example I. Methane concentration in the bed outlet remained below 1 ppm for a period of 340 minutes.

### EXAMPLE III

The vessel with an internal diameter of about 1" was filled with about 250 g of 6x8 mesh commercially available activated carbon. The feed contained 1% methane in carbon monoxide and was sent to the bed at a flow rate of 5 std liters/min at 50 psig (64.7 x 6894Pa) and -173° C. Methane concentration at the bed outlet was monitored and methane concentration of less than 1 ppm was seen for a period of about 217 minutes.

These examples illustrate that fairly high hydrocarbon adsorption capacities can be obtained by adsorbing these impurities from carbon monoxide at cryogenic adsorption temperatures.

Although the invention is described with reference to specific examples, the scope of the invention is not limited thereto. For example, the feedgas containing carbon monoxide can come from processes other than steam-methane reforming and partial oxidation. Such processes include catalytic partial oxidation, carbon dioxide reforming, methanol cracking and other waste streams from various chemical processes. Also, the feed gas may contain significant quantities of hydrogen as would be typical for a syngas feed.

## Claims

1. A method for removing impurities from a carbon monoxide-containing gas stream at cryogenic temperatures by a temperature swing adsorption process having an adsorption step and a regeneration step, the adsorption step comprising passing said gas stream through a bed containing an adsorbent material selective for hydrocarbons, thereby producing a carbon monoxide gas stream free of hydrocarbons.

2. A method as claimed in claim 1, wherein two or more adsorbent beds are used.

3. A method as claimed in claim 1 or claim 2, wherein said adsorbent material is selected from the group consisting of activated carbon, modified activated carbon, pillared clays, carbon molecular sieve, clinoptilolites, modified clinoptilolites, small pore mordenites and mixtures thereof.

4. A method as claimed in any one of the preceding claims, wherein the said carbon monoxide stream is synthesis gas.

5. A method as claimed in any one of the preceding claims, wherein the temperature of the carbon monoxide containing gas stream is about -175°C to about -75 °C.

6. A method as claimed in any one of the preceding claims, wherein the pressure of said bed is in the range 1.0 to 41 bar.

7. The method as claimed in claim 1, wherein the regeneration step comprises passing a regeneration gas through the adsorption bed, the temperature of said regeneration gas being in the range of -20°C to 250 °C.

8. The method as claimed in any one of the preceding claims, further comprising forming said carbon monoxide-containing gas stream by passing a precursor carbon monoxide gas stream through a vacuum swing adsorption unit to enrich the precursor stream in carbon monoxide and a process unit selected from the group consisting of oxygen and carbon dioxide removal units.

9. A method for removing impurities from a carbon monoxide containing gas stream comprising passing said gas stream sequentially through a first membrane separation unit and a process unit, the process unit being selected from the group consisting of a second membrane separation unit, a deoxo/methanizer unit, a first temperature swing adsorption unit, a cryogenic adsorption unit, and combinations of these process units.

10. A method as claimed in claim 9, wherein said first membrane separation unit removes hydrogen, carbon dioxide, water and oxygen from said carbon monoxide-containing gas stream.

11. A method as claimed in claim 9, wherein said second membrane unit removes hydrogen, carbon dioxide and oxygen from said carbon monoxide-containing gas stream.

12. A method as claimed in claim 9, wherein said deoxo/methanizer unit removes oxygen and hydrogen from said carbon monoxide containing gas stream.

13. A method as claimed in claim 9, wherein said first temperature swing adsorption unit contains an adsorbent selective for carbon dioxide.

14. A method as claimed in claim 9, wherein said cryogenic adsorption unit is a second temperature swing adsorption unit.

15. A method according to claim 14, wherein the second temperature swing adsorption is employed in addition to the first temperature swing adsorption unit.

16. A method according to claim 14 or claim 15, in which the second temperature swing adsorption unit performs a method as claimed in any one of claims 1 to 8.

17. A method as claimed in any one of claims 9 to 16, wherein said hydrocarbon are present in said carbon monoxide-containing gas stream in an amount of less than about 5% by volume.

18. A method as claimed in claim 9, wherein said carbon monoxide-containing gas stream is passed sequentially through a temperature swing adsorption unit and a vacuum swing adsorption unit prior to being passed through said process unit.
